# EUROPEAN PATENT SPECIFICATION

(11) **EP 3 370 345 B1**
(45) Date of publication and mention of the grant of the patent: **27.10.2021**
(21) Application number: 16880916.8
(22) Date of filing: 08.12.2016
(51) Int. Cl.: H04B 7/024, H04B 7/0452, H04B 7/06

(54) **JOINT DATA TRANSMISSION METHOD AND DEVICE**
VERFAHREN UND VORRICHTUNG FÜR GEMEINSAME DATENÜBERTRAGUNG
PROCÉDÉ ET DISPOSITIF D'ÉMISSION CONJOINTE DE DONNÉES

(30) Priority: 31.12.2015 CN 201511032504
(43) Date of publication of application: 05.09.2018
(73) Proprietor: Huawei Technologies Co., Ltd., Longgang District Shenzhen, Guangdong 518129 (CN)
(72) Inventor: PENG, Jingbo, Shenzhen Guangdong 518129 (CN); ZHU, Qiuping, Shenzhen Guangdong 518129 (CN)
(74) Representative: Epping - Hermann - Fischer
(86) International application number: PCT/CN2016/109058
(87) International publication number: WO 2017/114126

(56) References cited:
- WO-A2-2010/025286
- CN-A- 102 970 067
- CN-A- 103 905 103
- CN-A- 104 184 547
- CN-A- 105 721 026
- US-A1- 2011 044 193
- US-A1- 2012 077 531
- US-A1- 2012 224 541
- US-A1- 2013 286 960
- US-A1- 2014 293 904

## Description

### TECHNICAL FIELD

This application relates to the communications field, and in particular, to a joint data transmission method and a device.

### BACKGROUND

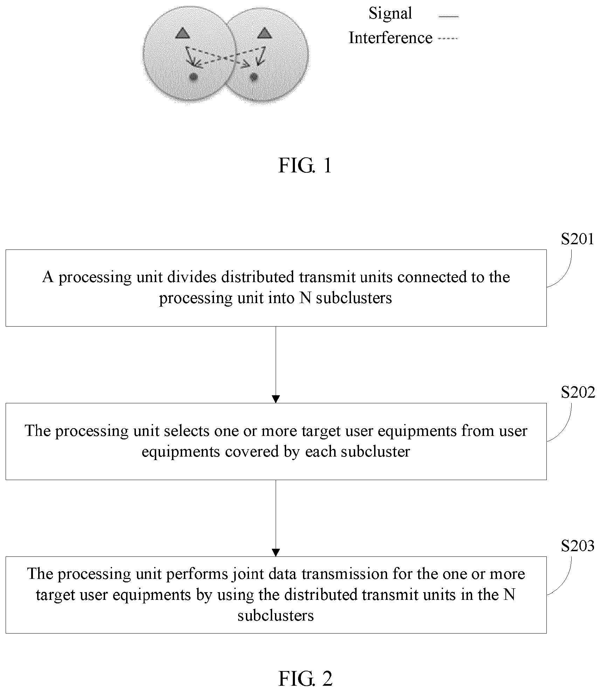

A distributed antenna system simultaneously transmits data to a plurality of user equipments by using distributed transmit units distributed at different geographic locations, such as a radio remote unit (Radio Remote Unit, RRU). As shown in FIG. 1, a distributed transmit unit (represented by a triangle) 1 transmits data for user equipment (represented by a dot) 1, and a distributed transmit unit 2 transmits data for user equipment 2. When the distributed transmit unit transmits, based on this communication mechanism, data to user equipment served by the distributed transmit unit, interference is caused to another user equipment. For example, in FIG. 1, the distributed transmit unit 1 causes interference to the user equipment 2, and the distributed transmit unit 2 causes interference to the user equipment 1. The foregoing phenomenon is referred to as mutual interference within the distributed antenna system.

Currently, a joint data transmission technology is used to resolve a problem of mutual interference between channels in the distributed antenna system. Joint data transmission is explained herein: A transmit weight or power used by each transmit antenna to transmit a signal is calculated according to information such as a statistical channel characteristic or a real-time channel characteristic between each distributed transmit unit and each user equipment, and to-be-transmitted data of each user equipment is transmitted after being weighted by using the weight, so that a signal carrying data of another user equipment is reversely offset when arriving at this user equipment, to cancel interference.

However, existing joint data transmission technologies have relatively high complexity.

US 2011/0044193 A1 describes systems and methods for coordinating transmissions in distributed wireless systems via user clustering, comprising: measuring link quality between a target user and a plurality of distributed-input distributed-output (DIDO) distributed antennas of base transceiver stations (BTSs); using the link quality measurements to define a user cluster; measuring channel state information (CSI) between each user and each DIDO antenna within a defined user cluster; and precoding data transmissions between each DIDO antenna and each user within the user cluster based on the measured CSI.

US 2013/0286960 A1 relates to a user equipment comprising a plurality of antennas configured to communicate with at least one base station; and a processing circuitry coupled to the plurality of antennas. The processing circuitry is configured to receive physical downlink control channel (PDCCH) from the at least one base station, wherein the PDCCH is included in one or more transmit (Tx) beams, wherein a Tx beam is defined by the cell specific reference signal (CRS) transmitted through the Tx beam and a Tx beam is configured to carry a beam identifier, and wherein the PDCCH is configured to include resource allocation information for the user equipment.

WO 2010/025286 A2 relates to a method, comprising: evaluating local utilities of possible local strategies involving a base station at a given time; exchanging strategy and utility information with at least one neighbor base station through message passing; generating network-wide utility estimates for the possible local strategies as a function of the strategy and utility information received from the at least one neighbor base station through message passing and the evaluated local utilities; and selecting a particular local strategy from the possible local strategies for use by the base station based upon the network-wide utility estimates.

US 2014/293904 A1 relates to a method of designing sparse transmit beamforming for a network multiple-input multiple output (MIMO) system, the method comprising: dynamically forming, by a cloud central processor, a cluster of transmission points (TPs) for use in transmit beamforming for each of a plurality of user equipment (UEs) in the system by optimizing a network utility function and system resources; determining, by the cloud central processor, a sparse beamforming vector for each UE according to the optimizing; and transmitting, by the cloud central processor, a message and first beamforming coefficients to each TP in the formed cluster associated with a first UE in the plurality of UEs, wherein each TP in the formed cluster associated with the first UE correspond to nonzero entries in a first beamforming vector corresponding to the first UE.

US 2012/077531 A1 discloses a distributed antenna system comprising users; remote radio heads which are to be divided into clusters; and a central base station (CBS) including a CBS processor, a CBS memory, a user ordering module, and a user scheduling and cluster formation module. The user ordering module is configured to order the users in decreasing values of proportional fair scheduling metrics to provide a set of ordered users. The user scheduling and cluster formation module is configured to schedule the users according to the order of the users in decreasing values of proportional fair scheduling metrics; and for each user being scheduled according to the order of the users, pick up first N number of remote radio heads, in decreasing order of signal strength to the user being scheduled, which have not been picked up previously, to form a cluster of size N for the user being scheduled.

### SUMMARY

This application provides a joint data transmission method and a device, according to the attached claims, to resolve a problem of reducing joint data transmission complexity while ensuring distributed antenna system performance.

### BRIEF DESCRIPTION OF DRAWINGS

To describe the technical solutions in the embodiments of this application or in the prior art more clearly, the following briefly introduces the accompanying drawings required for describing the embodiments or the prior art. Apparently, the accompanying drawings in the following description show some embodiments of this application, and a person of ordinary skill in the art may still derive other drawings from these accompanying drawings without creative efforts.
FIG. 1 is a schematic diagram of simultaneously transmitting data for a plurality of user equipments by a distributed transmit unit;
FIG. 2 is a flowchart of a joint data transmission method according to one example;
FIG. 3 is a schematic diagram of joint data transmission according to one example;
FIG. 4 is a flowchart of a joint data transmission method according to another example;
FIG. 5 is a schematic diagram of joint data transmission according to one example;
FIG. 6 is a flowchart of a joint data transmission method disclosed in an embodiment of this application;
FIG. 7 is a schematic diagram of joint data transmission disclosed in an embodiment of this application;
FIG. 8 is a flowchart of a joint data transmission method according to another example;
FIG. 9 is a schematic diagram of joint data transmission according to one example;
FIG. 10 is a schematic structural diagram of a baseband processing unit disclosed in an embodiment of this application; and
FIG. 11 is a schematic structural diagram of a base station disclosed in an embodiment of this application.

### DESCRIPTION OF EMBODIMENTS

The embodiments of this application are applied to a scenario in which joint data transmission is performed between a plurality of distributed transmit units and a plurality of user equipments. The plurality of distributed transmit units may be RRUs connected to a same baseband processing unit BBU, or may be a plurality of interconnected base stations, and the plurality of base stations are all connected to a BBU of one of the plurality of base stations.

The following describes the technical solutions in the embodiments of this application with reference to the accompanying drawings in the embodiments of this application.

FIG. 2 shows an example of a joint data transmission method, including the following steps.

S201. A processing unit divides distributed transmit units connected to the processing unit into N subclusters.

In this example, the processing unit may be a BBU disposed individually, or may be a BBU disposed in a base station.

S202. The processing unit selects one or more target user equipments from user equipments covered by each subcluster.

Specifically, the processing unit may perform S202 when performing Media Access Control layer (Media Access Control Layer, MAC Layer) processing on to-be-transmitted data, that is, selecting, at a MAC layer, target user equipment from user equipments covered by each subcluster.

There are a plurality of policies for selecting the target user equipment. Common methods include: selecting user equipment with a better channel status, selecting user equipment with a higher priority, selecting user equipment with better orthogonality between user equipments, scheduling user equipments in a rotation manner according to fairness, and some improved methods on such basis.

S203. The processing unit performs joint data transmission for the one or more target user equipments by using the distributed transmit units in the N subclusters.

Specifically, the processing unit may perform S203 when performing physical layer (physical layer) processing on the to-be-transmitted data, that is, performing, at the physical layer, joint data transmission for the plurality of target user equipments by using a plurality of distributed transmit units.

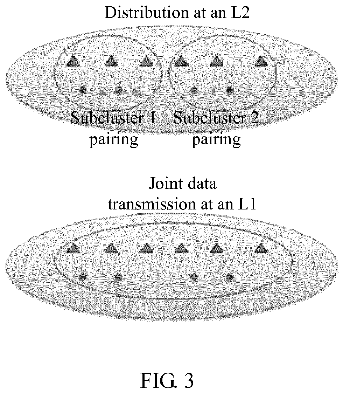

The foregoing process is described by using an example. As shown in FIG. 3, L2 represents the MAC layer, L1 represents the physical layer, a triangle represents a distributed transmit unit, a dark-colored filled circle represents user equipment selected from a subcluster, that is, target user equipment, and a light-colored filled circle represents user equipment that is not selected in the subcluster.

In FIG. 3, the processing unit divides distributed transmit units into two subclusters; selects, at an L2 layer, target user equipment from user equipments covered by the distributed transmit units of each subcluster; and performs, at an L1 layer, joint data transmission by using all distributed transmit units for target user equipment.

It can be learned that, in the method described in this example, after the distributed transmit units are divided into clusters, target user equipment is selected from each subcluster, that is, consideration is performed on a user equipment group basis instead of a user equipment basis. This reduces complexity. In addition, regardless of which target user equipments are selected, all the distributed transmit units are used at the L1 layer for joint scheduling. In this way, interference between subclusters can be avoided, thereby improving system performance.

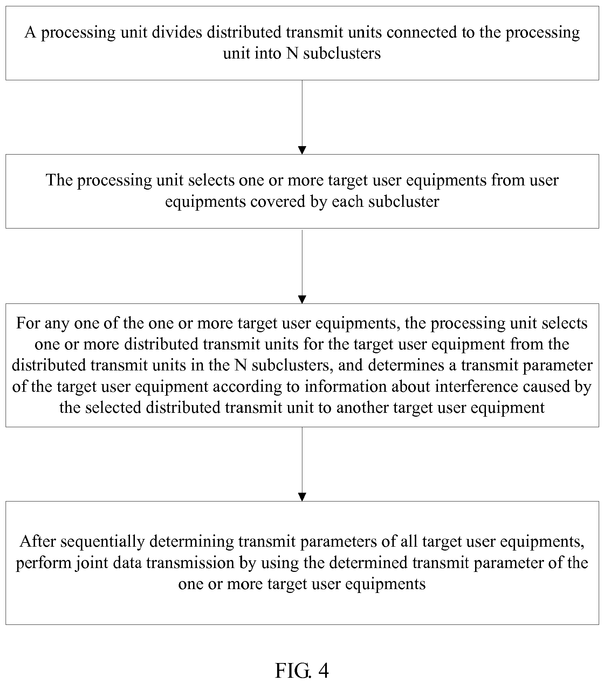

FIG. 4 is another example of a joint data transmission method. A difference with the method shown in FIG. 2 lies in that after selecting one or more target user equipments from each subcluster, for any one of the one or more target user equipments, the processing unit selects one or more distributed transmit units for the target user equipment from the distributed transmit units in the N subclusters, determines another target user equipment that receives interference from the selected distributed transmit unit, and determines a transmit parameter of the target user equipment according to information about the interference caused by the selected distributed transmit unit to the another target user equipment; and after sequentially determining transmit parameters of all target user equipments, performs joint data transmission by using the determined transmit parameter of the one or more target user equipments.

Specifically, there are a plurality of selection methods for selecting the distributed transmit unit for the target user equipment, for example:
1. The distributed transmit units are ranked according to strength of signals transmitted by the distributed transmit units to the user equipment, and one or more distributed transmit units having strongest transmit signal strength are selected.
2. All distributed transmit units whose ratio is greater than a preset value are selected according to a ratio of strength of a signal transmitted by each distributed transmit unit to the strength of a signal transmitted by the distributed transmit unit having strongest transmit signal strength.

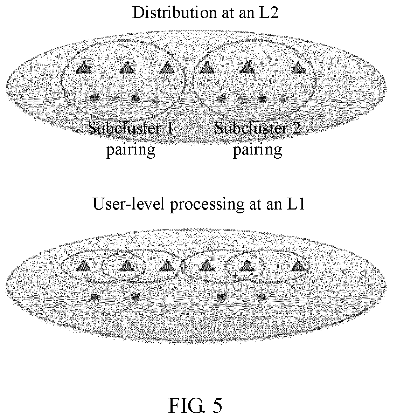

For example, as shown in FIG. 5, in an L1 layer processing stage, two leftmost distributed transmit units are selected for target user equipment 1 (leftmost user equipment), and then it is determined that target user equipment 2 adjacent to the target user equipment 1 receives interference from the two leftmost distributed transmit units. Therefore, the processing unit performs joint data transmission by using the two leftmost distributed transmit units for the target user equipment 1 and the target user equipment 2.

In the method described in this example, clustering at the L2 layer can reduce computational complexity, parallel processing of a plurality of subclusters is implemented, and processing at the L1 layer is performed on a user equipment basis, so that computational complexity can be reduced and parallel processing is implemented while system performance is ensured.

In the method shown in FIG. 4, when each distributed transmit unit has relatively many antennas, there is still a problem of relatively high complexity. For example, in a typical scenario, one user equipment can "see" three to five RRUs. That is, when each RRU has eight antennas, one UE can "see" 24 to 40 antennas. Therefore, when this quantity of antennas are used for joint data transmission, a computation amount is still relatively large.

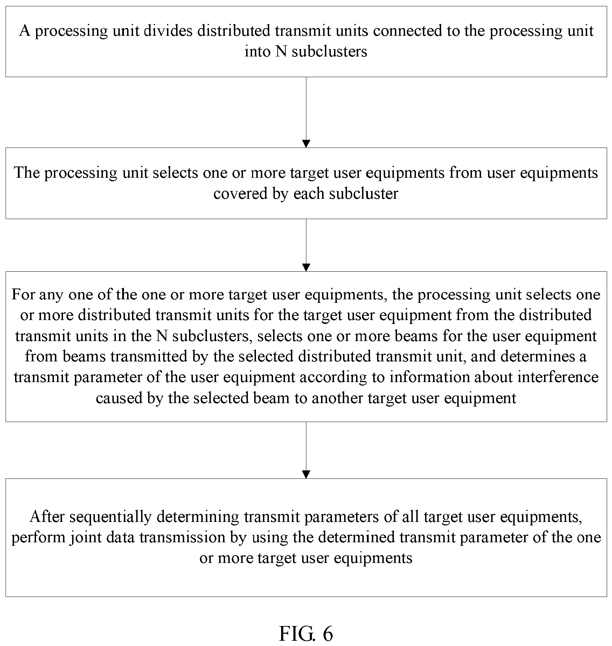

To further reduce computational complexity, the joint data transmission method according to the embodiment shown in FIG. 6 is used. A difference between the method shown in FIG. 6 and that in FIG. 2 or FIG. 4 lies in that after selecting one or more target user equipments, for any one of the one or more target user equipments, the processing unit selects one or more distributed transmit units for the target user equipment from the distributed transmit units in the N subclusters, selects one or more beams for the user equipment from beams transmitted by the selected distributed transmit unit, determines another target user equipment that receives interference from the selected beam, and determines a transmit parameter of the user equipment according to information about the interference caused by the selected beam to the another target user equipment; and after sequentially determining transmit parameters of all target user equipments, performs joint data transmission by using the determined transmit parameter of the one or more target user equipments.

The beam is produced by a plurality of distributed transmit units in the N subclusters, and different beams to same user equipment have different radiation intensities.

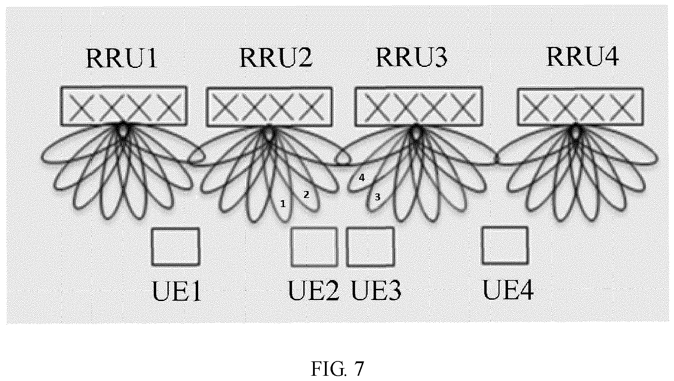

For example, as shown in FIG. 7, each RRU first produces a plurality of (analog/digital) beams pointing to different directions. Beams 1, 2, 3, and 4 are selected for UE2, and it is determined that the beams 1, 2, 3, and 4 produce interference to UE3; a transmission mode for the UE2 is determined according to the beams 1, 2, 3, and 4, the UE2, and the UE3; and finally joint data transmission is performed for the UE2 by using the beams 1, 2, 3, and 4.

It can be learned that the method in this embodiment can further reduce joint data transmission complexity.

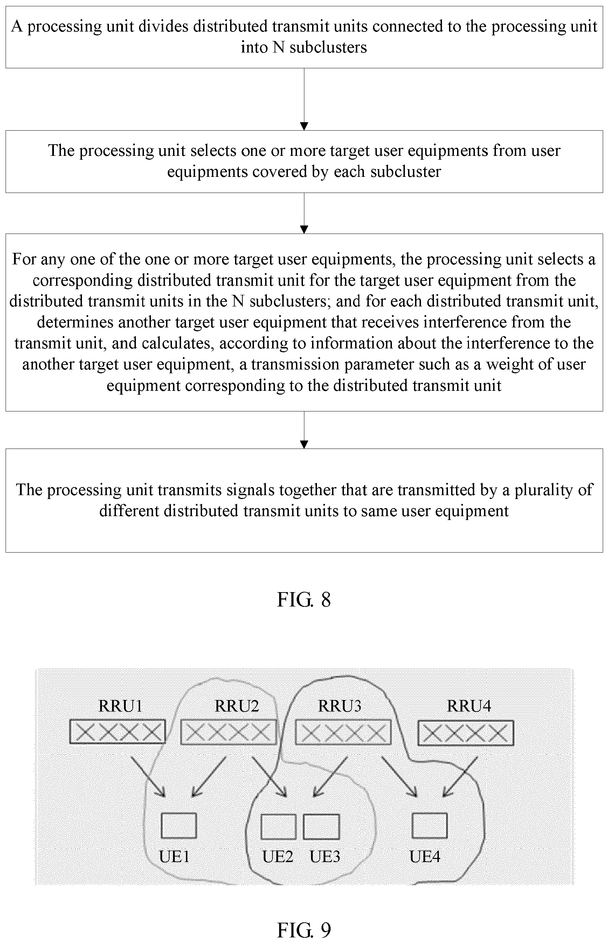

FIG. 8 is another example of a joint data transmission method. A difference with the foregoing embodiment lies in:
after selecting one or more target user equipments, for any one of the one or more target user equipments, the processing unit selects a corresponding distributed transmit unit for the target user equipment from the distributed transmit units in the N subclusters; for each distributed transmit unit, the processing unit determines another target user equipment that receives interference from the transmit unit, and calculates, according to information about the interference to the another target user equipment, a transmission parameter such as a weight of user equipment corresponding to the distributed transmit unit; and the processing unit transmits signals together that are transmitted by a plurality of different distributed transmit units to same user equipment.

For example, as shown in FIG. 9, both an RRU2 and an RRU3 are selected for UE2 and UE3. The RRU2 calculates transmission parameters such as weights for performing joint data transmission for UE1, the UE2, and the UE3 by the RRU2. The RRU3 calculates transmission parameters such as weights for performing joint data transmission for the UE2, the UE3, and UE4 by the RRU3, and then the RRU2 and the RRU3 perform joint transmission for the UE2.

According to the method in this example, complexity can be further reduced.

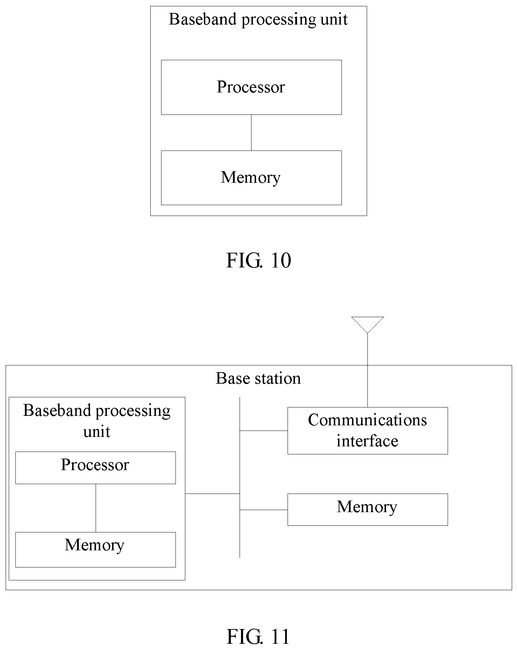

FIG. 10 is a baseband processing unit disclosed in an embodiment of this application, including a processor and a memory.

The memory may be a read-only memory (Read Only Memory, ROM), a static storage device, a dynamic storage device, or a random access memory (Random Access Memory, RAM). The memory is configured to store an application program and data generated in a process of running the application program by the processor.

The processor may be a general-purpose central processing unit (Central Processing Unit, CPU), a microprocessor, an application-specific integrated circuit (Application Specific Integrated Circuit, ASIC), or one or more integrated circuits, and is configured to execute a related program.

The processor is configured to run the application program stored in the memory, so as to implement the processes shown in FIG. 2, FIG. 4, FIG. 6, and FIG. 8.

The baseband processing unit in this embodiment has relatively low computational complexity when performing joint data transmission by using a plurality of distributed transmit units.

FIG. 11 is a base station disclosed in an embodiment of this application, including the baseband processing unit shown in FIG. 10. In addition, the base station includes a communications interface and a memory, and all parts communicate with each other by using a bus.

An embodiment of this application further discloses a distributed transmit system, including a plurality of RRUs and a BBU connected to the plurality of RRUs, where the BBU is shown in FIG. 10.

An embodiment of this application discloses another distributed transmit system, including a plurality of first base stations and a second base station connected to the plurality of first base stations, where the second base station is shown in FIG. 11.

The foregoing distributed transmit systems have relatively low computational complexity when performing joint data transmission for a plurality of user equipments.

The embodiments in this specification are all described in a progressive manner, for same or similar parts in the embodiments, reference may be made to these embodiments, and each embodiment focuses on a difference from other embodiments.

## Claims

1. A joint data transmission method, comprising:
dividing (S201), by a processing unit, distributed transmit units connected to the processing unit into N subclusters;
selecting (S202), by the processing unit, one or more target user equipments from user equipments covered by each subcluster; and
performing (S203), by the processing unit, joint data transmission for the one or more target user equipments by using the distributed transmit units in the N subclusters,
wherein the performing (S203), by the processing unit, joint data transmission for the one or more target user equipments by using the distributed transmit units in the N subclusters comprises:
for any one of the one or more target user equipments, selecting, by the processing unit, one or more distributed transmit units for the target user equipment from the distributed transmit units in the N subclusters, determining another target user equipment that receives interference from the selected distributed transmit unit, and determining a transmit parameter of the target user equipment according to information about the interference caused by the selected distributed transmit unit to the another target user equipment; and
performing, by the processing unit, joint data transmission by using the determined transmit parameter of the one or more target user equipments; and
wherein the determining another target user equipment that receives interference from the selected distributed transmit unit comprises:
selecting one or more beams for the target user equipment from beams transmitted by the selected distributed transmit unit, determining another target user equipment that receives interference from the selected beam; and
the determining a transmit parameter of the target user equipment according to information about the interference caused by the selected distributed transmit unit to the another target user equipment comprises:
determining the transmit parameter of the target user equipment according to information about the interference caused by the selected beam to the another target user equipment; wherein beams are produced by a plurality of distributed transmit units in the N subclusters, and different beams to the same user equipment have different radiation intensities.

2. A baseband processing unit, comprising:
a processor and a memory, wherein
the memory is configured to store an application program and data generated in a process of running the application program by the processor; and
the processor is configured to run the application program stored in the memory, to implement the following functions: dividing distributed transmit units connected to the processing unit into N subclusters; and selecting one or more target user equipments from user equipments covered by each subcluster, so that the distributed transmit units in the N subclusters perform joint data transmission for the one or more target user equipments,
wherein the processor is further configured to:
for any one of the one or more target user equipments, select one or more distributed transmit units for the target user equipment from the distributed transmit units in the N subclusters, select one or more beams for the target user equipment from beams transmitted by the selected distributed transmit unit, determine another target user equipment that receives interference from the selected beam, and determine a transmit parameter of the target user equipment according to information about the interference caused by the selected beam to the another target user equipment; and perform joint data transmission by using the determined transmit parameter of the one or more target user equipments, wherein beams are produced by a plurality of distributed transmit units in the N subclusters, and different beams to the same user equipment have different radiation intensities.

3. Abase station, comprising:
the baseband processing unit according to claim 2.

4. A distributed transmit system, comprising:
a plurality of RRUs and a baseband processing unit BBU connected to the plurality of RRUs, wherein the BBU is the baseband processing unit according to claim 2.

5. A distributed transmit system, comprising:
a plurality of first base stations and a second base station connected to the plurality of first base stations, wherein the second base station comprises the baseband processing unit according to claim 2.

6. A computer program product comprising instruction which, when executed by a computer, cause the computer to carry out the method of claim 1.

## Patentansprüche

1. Verfahren für gemeinsame Datenübertragung, umfassend:
Aufteilen (S201), durch eine Verarbeitungseinheit, von mit der Verarbeitungseinheit verbundenen verteilten Übertragungseinheiten in N Teilcluster;
Auswählen (S202), durch die Verarbeitungseinheit, eines oder mehrerer Ziel-Benutzergeräte aus Benutzergeräten, die vom jedem Teilcluster versorgt werden; und
Durchführen (S203), durch die Verarbeitungseinheit, von gemeinsamer Datenübertragung für das eine oder die mehreren Ziel-Benutzergeräte unter Verwendung der verteilten Übertragungseinheiten in den N Teilclustern,
wobei das Durchführen (S203), durch die Verarbeitungseinheit, von gemeinsamer Datenübertragung für das eine oder die mehreren Ziel-Benutzergeräte unter Verwendung der verteilten Übertragungseinheiten in den N Teilclustern umfasst:
für ein beliebiges vom einen oder den mehreren Ziel-Benutzergeräten, Auswählen, durch die Verarbeitungseinheit, einer oder mehrerer verteilter Übertragungseinheiten für das Ziel-Benutzergerät aus den verteilten Übertragungseinheiten in den N Teilclustern, Bestimmen eines anderen Ziel-Benutzergeräts, das Störungen von der ausgewählten verteilten Übertragungseinheit empfängt, und Bestimmen eines Übertragungsparameters des Ziel-Benutzergeräts gemäß Informationen über die Störungen, die durch die ausgewählte verteilte Übertragungseinheit für das andere Ziel-Benutzergerät verursacht werden; und
Durchführen, durch die Verarbeitungseinheit, von gemeinsamer Datenübertragung unter Verwendung des bestimmten Übertragungsparameters des einen oder der mehreren Ziel-Benutzergeräte; und
wobei das Bestimmen eines anderen Ziel-Benutzergeräts, das Störungen von der ausgewählten verteilten Übertragungseinheit empfängt, umfasst:
Auswählen eines oder mehrerer Strahlen für das Ziel-Benutzergerät aus den von der ausgewählten verteilten Übertragungseinheit übertragenen Strahlen, Bestimmen eines anderen Ziel-Benutzergeräts, das Störungen vom ausgewählten Strahl empfängt; und
das Bestimmen eines Übertragungsparameters des Ziel-Benutzergeräts gemäß den Informationen über die Störungen, die durch die ausgewählte verteilte Übertragungseinheit für das andere Ziel-Benutzergerät verursacht werden, umfasst:
Bestimmen des Übertragungsparameters des Ziel-Benutzergeräts gemäß den Informationen über die Störungen, die durch den ausgewählten Strahl für das andere Ziel-Benutzergerät verursacht werden; wobei die Strahlen von einer Vielzahl von verteilten Übertragungseinheiten in den N Teilclustern erzeugt werden und verschiedene Strahlen zum gleichen Benutzergerät verschiedene Strahlungsintensitäten aufweisen.

2. Basisbandverarbeitungseinheit, umfassend:
einen Prozessor und einen Speicher, wobei
der Speicher dafür ausgelegt ist, ein Anwendungsprogramm und Daten zu speichern, die in einem Prozess der Ausführung des Anwendungsprogramms durch den Prozessor erzeugt werden; und
der Prozessor dafür ausgelegt ist, das im Speicher gespeicherte Anwendungsprogramm zum Implementieren der folgenden Funktionen auszuführen: Aufteilen von mit der Verarbeitungseinheit verbundenen verteilten Übertragungseinheiten in N Teilcluster; und
Auswählen eines oder mehrerer Ziel-Benutzergeräte aus den vom jeweiligen Teilcluster versorgten Benutzergeräten, so dass die verteilten Übertragungseinheiten in den N Teilclustern gemeinsame Datenübertragung für das eine oder die mehreren Ziel-Benutzergeräte durchführen,
wobei der Prozessor ferner für folgende Vorgänge ausgelegt ist:
für ein beliebiges vom einen oder den mehreren Ziel-Benutzergeräten, Auswählen einer oder mehrerer verteilter Übertragungseinheiten für das Ziel-Benutzergerät aus den verteilten Übertragungseinheiten in den N Teilclustern, Auswählen eines oder mehrerer Strahlen für das Ziel-Benutzergerät aus den von der ausgewählten verteilten Übertragungseinheit übertragenen Strahlen, Bestimmen eines anderen Ziel-Benutzergeräts, das Störungen vom ausgewählten Strahl empfängt, und Bestimmen eines Übertragungsparameters des Ziel-Benutzergeräts gemäß den Informationen über die vom ausgewählten Strahl verursachte Störungen für das andere Ziel-Benutzergerät; und
Durchführen von gemeinsamer Datenübertragung unter Verwendung des bestimmten Übertragungsparameters des einen oder der mehreren Ziel-Benutzergeräte, wobei Strahlen von einer Vielzahl von verteilten Übertragungseinheiten in den N Teilclustern erzeugt werden und verschiedene Strahlen zum gleichen Benutzergerät verschiedene Strahlungsintensitäten aufweisen.

3. Basisstation, umfassend:
die Basisbandverarbeitungseinheit nach Anspruch 2.

4. Verteiltes Übertragungssystem, umfassend:
eine Vielzahl von RRUs und eine mit der Vielzahl von RRUs verbundene Basisbandverarbeitungseinheit BBU, wobei die BBU die Basisbandverarbeitungseinheit nach Anspruch 2 ist.

5. Verteiltes Übertragungssystem, umfassend:
eine Vielzahl von ersten Basisstationen und eine zweite Basisstation, die mit der Vielzahl von ersten Basisstationen verbunden ist, wobei die zweite Basisstation die Basisbandverarbeitungseinheit nach Anspruch 2 umfasst.

6. Computerprogrammprodukt, umfassend Anweisungen, die bei ihrer Ausführung durch einen Computer den Computer veranlassen, das Verfahren nach Anspruch 1 durchzuführen.

## Revendications

1. Procédé d'émission conjointe de données, comprenant :
la division (S201), par une unité de traitement, d'unités d'émission distribuées connectées à l'unité de traitement en N sous-grappes ;
la sélection (S202), par l'unité de traitement, d'un ou de plusieurs équipements d'utilisateur cibles à partir d'équipements d'utilisateur couverts par chaque sous-grappe ; et
la réalisation (S203), par l'unité de traitement, d'une émission conjointe de données pour lesdits un ou plusieurs équipements d'utilisateur cibles grâce à l'utilisation des unités d'émission distribuées dans les N sous-grappes,
dans lequel la réalisation (S203), par l'unité de traitement, d'une émission conjointe de données pour lesdits un ou plusieurs équipements d'utilisateur cibles grâce à l'utilisation des unités d'émission distribuées dans les N sous-grappes comprend :
pour n'importe lequel desdits un ou plusieurs équipements d'utilisateur cibles, la sélection, par l'unité de traitement, d'une ou de plusieurs unités d'émission distribuées pour l'équipement d'utilisateur cible à partir des unités d'émission distribuées dans les N sous-grappes, la détermination d'un autre équipement d'utilisateur cible qui reçoit des interférences en provenance de l'unité d'émission distribuée sélectionnée, et la détermination d'un paramètre d'émission de l'équipement d'utilisateur cible en fonction d'informations relatives aux interférences causées par l'unité d'émission distribuée sélectionnée à l'autre équipement d'utilisateur cible ; et
la réalisation, par l'unité de traitement, d'une émission conjointe de données grâce à l'utilisation du paramètre d'émission déterminé desdits un ou plusieurs équipements d'utilisateur cibles ; et
dans lequel la détermination d'un autre équipement d'utilisateur cible qui reçoit des interférences en provenance de l'unité d'émission distribuée sélectionnée comprend :
la sélection d'un ou de plusieurs faisceaux pour l'équipement d'utilisateur cible à partir de faisceaux émis par l'unité d'émission distribuée sélectionnée, la détermination d'un autre équipement d'utilisateur cible qui reçoit des interférences en provenance du faisceau sélectionné ; et
la détermination d'un paramètre d'émission de l'équipement d'utilisateur cible en fonction d'informations relatives aux interférences causées par l'unité d'émission distribuée sélectionnée audit autre équipement d'utilisateur cible comprend :
la détermination du paramètre d'émission de l'équipement d'utilisateur cible en fonction d'informations relatives aux interférences causées par le faisceau sélectionné audit autre équipement d'utilisateur cible ;
dans lequel les faisceaux sont produits par une pluralité d'unités d'émission distribuées dans les N sous-grappes, et différents faisceaux vers le même équipement d'utilisateur ont des intensités de rayonnement différentes.

2. Unité de traitement de bande de base, comprenant :
un processeur et une mémoire, dans laquelle
la mémoire est configurée pour stocker un programme d'application et des données générées dans un processus d'exécution du programme d'application par le processeur ; et
le processeur est configuré pour exécuter le programme d'application stocké dans la mémoire, afin d'implémenter les fonctions suivantes : la division d'unités d'émission distribuées connectées à l'unité de traitement en N sous-grappes ; et la sélection d'un ou
de plusieurs équipements d'utilisateur cibles à partir d'équipements d'utilisateur couverts par chaque sous-grappe, de sorte que les unités d'émission distribuées dans les N sous-grappes réalisent une émission conjointe de données pour lesdits un ou plusieurs équipements d'utilisateur cibles,
dans laquelle le processeur est configuré en outre pour :
pour n'importe lequel desdits un ou plusieurs équipements d'utilisateur cibles, sélectionner une ou plusieurs unités d'émission distribuées pour l'équipement d'utilisateur cible à partir des unités d'émission distribuées dans les N sous-grappes, sélectionner un ou plusieurs faisceaux pour l'équipement d'utilisateur cible à partir de faisceaux émis par l'unité d'émission distribuée sélectionnée, déterminer un autre équipement d'utilisateur cible qui reçoit des interférences en provenance du faisceau sélectionné, et déterminer un paramètre d'émission de l'équipement d'utilisateur cible en fonction d'informations relatives aux interférences causées par le faisceau sélectionné audit autre équipement d'utilisateur cible ; et réaliser une émission conjointe de données grâce à l'utilisation du paramètre d'émission déterminé desdits un ou plusieurs équipements d'utilisateur cibles, dans laquelle les faisceaux sont produits par une pluralité d'unités d'émission distribuées dans les N sous-grappes, et différents faisceaux vers le même équipement d'utilisateur ont des intensités de rayonnement différentes.

3. Station de base, comprenant :
l'unité de traitement de bande de base selon la revendication 2.

4. Système d'émission distribué, comprenant :
une pluralité de RRU et une unité de traitement de bande de base BBU connectée à la pluralité de RRU, dans lequel la BBU est l'unité de traitement de bande de base selon la revendication 2.

5. Système d'émission distribué, comprenant :
une pluralité de premières stations de base et une deuxième station de base connectée à la pluralité de premières stations de base, dans lequel la deuxième station de base comprend l'unité de traitement de bande de base selon la revendication 2.

6. Produit à programme informatique comprenant une instruction qui, lorsqu'elle est exécutée par un ordinateur, amène l'ordinateur à effectuer le procédé de la revendication 1.
